Europäisches Patentamt

(19) European Patent Office

Office européen des brevets

(11) Publication number: **0 066 576**
**B1**

(12) **EUROPEAN PATENT SPECIFICATION**

(45) Date of publication of patent specification: **06.02.85**

(51) Int. Cl.⁴: **H 04 M 11/08**

(21) Application number: **81903210.3**

(22) Date of filing: **08.12.81**

(86) International application number:
**PCT/SE81/00360**

(87) International publication number:
**WO 82/02133 24.06.82 Gazette 82/16**

(54) **A METHOD AND APPARATUS FOR TRANSFERRING THE SAME INFORMATION TO A PLURALITY OF SUBSCRIBERS.**

(30) Priority: **16.12.80 SE 8008836**

(43) Date of publication of application:
**15.12.82 Bulletin 82/50**

(45) Publication of the grant of the patent:
**06.02.85 Bulletin 85/06**

(84) Designated Contracting States:
**DE FR GB NL**

(56) References cited:
**US-A-4 068 099**

**Tele, issued 1958 (Stockholm) B Bjurel,
"Anläggningar för telenytt", see pages 255 and
256**

(73) Proprietor: **TELEFONAKTIEBOLAGET L M
ERICSSON
S-126 25 Stockholm (SE)**

(72) Inventor: **FÄRJH, Arne Fredrick
Blackensvägen 37
S-125 34 Alvsjö (SE)**

(74) Representative: **Raub, Werner et al
Telefonab L M Ericsson
S-126 25 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

Technical field

The present invention relates to a method and apparatus for transferring the same information to a plurality of subscribers, telecommunications connections being established due to given commands originated by said subscribers, for connecting a source sending said information via a centrally placed transit exchange to said subscribers which are each connected via a subscriber line to a respective one of a number of peripherally placed local exchanges, each of which is connected via its trunk lines, identifiable by trunk line numbers, to said transit exchange.

Examples of said information source are speech machines, which send information such as news, weather conditions etc. to a telecommunications network or give directions in conjunction with internal network interferences. A nodal point at which information from several subscribers participating in a conference call is added for being transmitted to the conferring subscribers and possibly to further subscribers who only listen, may also be regarded as an example of said information source. Connecting the information source to the respective subscribers is hereby ordered conventionally, e.g. by the subscribers' call signal or by means of a centrally based control unit for establishing connections for conference calls or interference information.

Background art

A telecommunications network is usually dimensioned so that said peripherally placed local exchanges function as concentrators with regard to traffic between the subscribers and the centrally placed transit exchange. A smaller number of trunk lines are arranged than what would be needed if all the subscribers spoke simultaneously in pairs with each other via the centrally placed transit exchange. A certain risk is thus accepted for congestion of traffic in the establishment of connections where trunk lines are included. The more trunk lines there are, the less risk of congestion and the more expensive the communications network.

The "trunk line" concept is usually present in conjunction with communications networks distributed in space, i.e. the exchange and transfer of analog information, the same trunk line mostly being used for both transfer directions. But as is known, there is also the four-wire system, in which a trunk line is only used for one transfer direction. In communications networks distributed in space and time, e.g. integrated switching transmission (IST) systems for pulse code modulation (PCM), the trunk lines each correspond to a time slot in a time division multiplex system selected for the network, whereby the information transmission is usually one-way and the exchange function executed in a digital mode.

In network dimensioning calculations, an information source of the kind mentioned above has so far been treated as a plurality of separate subscribers with special problems. In political crises, for instance, the news speech machine is subjected to traffic peaks, and thereby there exists a great risk of communication congestion as soon as the trunk lines are engaged. The connection of a speech machine to an analog telecommunications system has been proposed, e.g. in an article "Anläggning för telenytt" by B. Bjurel, published in TELE, the Swedish Telecommunications Aministration Technical Journal, 1958, pages 255—256, the treatment of the speech machine as a plurality of subscribers also includes the centrally placed transit exchange equipment. Connecting a speech machine to a digital time division multiplex system has been proposed, e.g. in the US—A—4.068.099, the time stage of the system being dimensioned and controlled such that the speed machine phase should not need more time stage hardware than that required for a single subscriber.

However, there is the great disadvantage in conventional analog and digital systems that each subscriber calling a speech machine is connected to it via a trunk line or time slot which is assigned solely to the associated call signal. The result of a political crisis can thus be that exactly the same news service is transferred on all trunk lines or time slots.

Disclosure of invention

In the solution now proposed for achieving the object mentioned in the introduction, which is characterized by the features of the claims, only a single trunk line is occupied independent of how many subscribers connected to the same local exchange receive the information generated by a speech machine. The function and treatment of the speech machine as a single special subscriber thereby extends right up to the peripherally placed local exchange. The connection of the speech machine to the telecommunications network decreases rather than increases the risk of system congestion. Further, to this, the work load of the central transit exchange equipment also decreases, since it does not establish any connection to the speech machine if one of the trunk lines is already connected to it.

Brief description of drawing

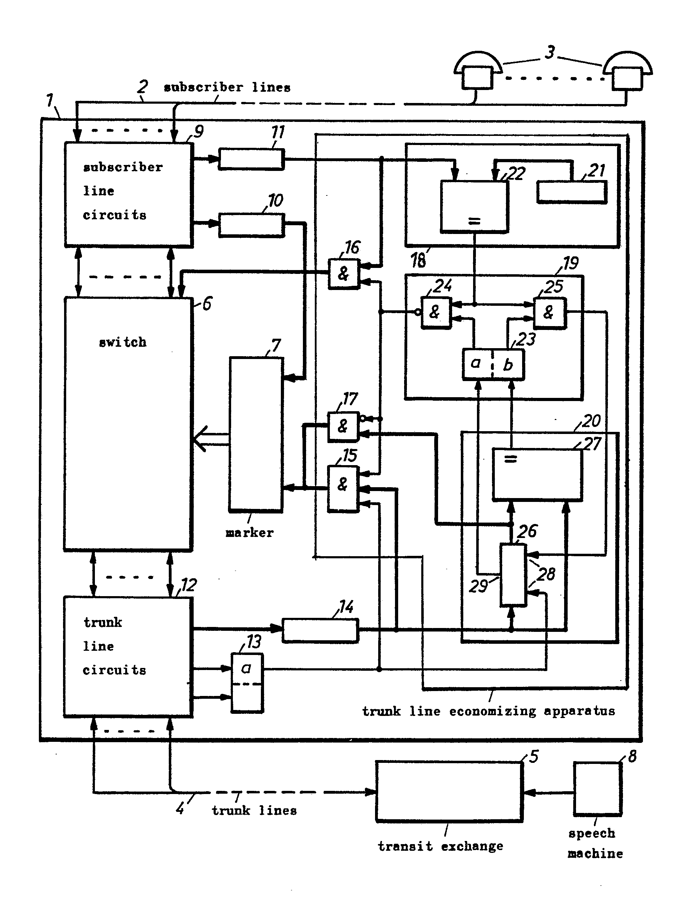

The invention will now be described in detail while referring to the appended drawing. Apart from a portion of a conventional telecommunications network, which includes subscribers, subscriber lines, a concentrator, trunk lines and a speech machine, the drawing also shows a trunk line economizing apparatus connected to the concentrator.

Mode for carrying out the invention

The drawing illustrates a local exchange 1 conventionally connected to subscribers 3 via subscriber lines 2 identifiable by means of subscriber numbers, and to a centrally placed transit exchange 5 via trunk lines 4 identifiable by means of trunk line numbers. The number of trunk lines is less than the number of subscribers and subscriber lines, i.e. the local exchange is a concentrator. Telecommunication connections between the subscriber lines and trunk lines are established by means of a switch 6 in the local exchange. The switch is operated conventionally by a marker 7 receiving the connection establishment information. The drawing solely shows the condition where one of the subscribers 3 with the subscriber line number A is calling a subscriber with number B, who is not one of the subscribers 3, and who is reached by means of the central transit exchange 5. The drawing does not show the transit exchange in detail, and neither does it show that the transit exchange is connected to the remaining subscribers in the telecommunications network, either through further trunk line groups and local exchanges or directly through further subscriber lines. As the sole one of all terminals which the subscribers 3 reach with the aid of the central exchange, there is shown on the drawing a speech machine 8 sending a special social service, e.g. news.

With the aid of conventional subscriber line circuits 9, through which the subscriber lines are connected to the subscriber line side of the switch, the calling subscriber's number A is registered in a first register 10 and the called subscriber's number B is registered in a second register 11. With the aid of conventional trunk line circuits 12 through which the trunk lines are connected to the trunk line side of the switch, it is registered in a first flip-flop 13, the bistable position of which (denoted by "a" on the drawing) generates a logical "1" or "0" signal, whether there is an idle trunk line or not, respectively. The number of the trunk line which is to be used in the subsequent connection establishment is registered in a third register 14.

As normal connection establishment information, the marker 7 receives the number A written into the register 10 as well as the trunk line number written in the register 14. As will be seen from the drawing, the latter number is transferred, via a first AND gate 15 the function of which is described later on. A normal connection establishment involves that the number B written into the register 11 is transferred to the central transit exchange 5 via a second AND gate 16, the function of which will be described later on, through the switch 6 and either through the trunk line selected by the register 14 or a signalling trunk line intended soley for signalling. A normal connection establishment further involves the central transit exchange conventionally achieving that the subscriber identified with the number B is called and connected to the trunk line selected, and that the subscriber line with the number A is connected in the switch 6 to the trunk line selected by the register 14.

Further to the mentioned substantially conventional communications network parts, the drawing also illustrates a third AND gate 17 forming a change-over switch together with said first AND gate 15, a special service command sender 18, a signal generator 19 and a memory unit 20, all of which are included in a trunk line economizing apparatus in accordance with the invention.

Said command sender 18 includes a fourth register 21 for constantly storing the special subscriber number B identifying said speech machine 8, and a first comparator 22 with its inputs connected to outputs on the registers 11 and 21 and its output constituting the output of the command sender. When one of the subscribers 3 calls the speech machine 8, contents of the registers 11 and 21 are the same and the command sender output is activated.

Said signal generator 19 includes a second flip-flop 23, with its bistable position (denoted on the drawing by "a" and "b", respectively) connected to an input on a fourth and fifth AND gate 24 and 25, respectively. The second inputs of said gates 24 and 25 are connected to the command sender and their outputs constitute the outputs of the signal generator. The gate 24 is provided with an inverting output, which consequently generates a logical "1" signal if the command sender 18 is inactivated independent of the state of flip-flop 23 and if the flip-flop 23 is put in position "b" independent of the command sender state, and which inverting output generates a logical "0" signal only if the command sender 18 is activated and the flip-flop 23 is in the position "a". The gate 25 generates a logical "1" signal only if the command sender 18 is activated and the flip-flop 23 is in the position "b", and generates a logical "0" signal if the command sender is inactivated independent of the state of flip-flop 23 and if the flip-flop 23 is in position "a" independent off the command sender state.

Said memory unit 20 includes a fifth register 26 and a second comparator 27 which compares the contents of the registers 14 and 26 and puts the flip-flop 23 in the position "b" when the contents are equal. On the drawing, there is indicated by means of signal inputs 28 that the information input of the register 26, which is connected to the output of the register 14, is activated for registering if the flip-flop 13 is set in the position "a" and the signal generator gate 25 generates a logical "1" signal. By means of a signal output 29 it is indicated that the register 26, due to a terminated registration, generates a signal which puts the flip-flop 23 in position "a". The information output of the register 26 is connected to the marker 7 via said gate 17, which is provided with an inverting control input.

The three conventional registers 10, 11 and 14 connected to the subscriber line circuits and trunk line circuits are of the destructive type, i.e. a shift of the registered contents to the marker and switch erases these contents, while the memory unit register 26 is of the non-destructive type, i.e. its contents can be shifted to the marker repeatedly until the contents are changed due to a new registration. The contents of the register 14 can be shifted in parallel to the marker 7 and register 26, but registration in the register 26 achieves no equality signal from the comparator 27, since the contents of the register 14 are erased when the registration in register 26 is terminated. For the sake of clarity, no local exchange control unit is shown on the drawing, this unit activating said conventional registers 10, 11 and 14 for writing and reading.

The local exchange provided with the trunk line economizing apparatus operates in the following manner:

If the register 11 contains an arbitrary subscriber number B which identifies a subscriber not shown on the drawing, the comparator 22 does not generate an equality signal, and the gate 24, independent of the state of the flip-flop 23, generates a logical "1" signal, and the gate 25 a logical "0" signal. Registration in register 26 and information transfer via gate 17 are blocked. The gates 15 and 16 are activated if an idle trunk line is available, i.e. if the flip-flop 13 is put into position "a" and the idle trunk line's number is intermediately stored in the register 14. A normal connection establishment is executed.

As will be described, the flip-flop 23 is set in the positions "a" or "b" if one or none of the trunk lines 4, respectively, is connected via the central transit exchange 5 to the speech machine 8.

If the flip-flop 23 is put in the position "b", if the register 11 intermediately stores the B number identifying the speech machine 8 and if an idle trunk line is selected, then the comparator 22 generates an equality signal and the gates 24 and 25 generate logical "1" signals. A normal connection establishment between the calling A subscriber and the speech machine is initiated. The register 26 is simultaneously activated for writing so that the contents of the register 14 is transferred thereto. When the writing operation has been carried out, the flip-flop 23 is set to the position "a" as indication that the one of the trunk lines 4 whose number is stored in the register 26 is being used to transfer the special service coming from the speech machine 8.

If the flip-flop 23 is put to the position "a" and if the register 11 intermediately stores the B number identifying the speech machine 8, the comparator 22 generates an equality signal and the gates 24 and 25 generate logical "0" signals. The gates 15 and 16 block initiation of a normal connection establishment. On the other hand, gate 17 is activated for transferring the number which is intermediately stored in the register 26 and identifies the trunk line already connected to the speech machine. Even if the trunk line circuits 12 select an idle trunk line at this instant, the associated number intermediately stored in the register 14 reaches neither the marker 7 nor register 26. The comparator 27 does not determine any equality, since intermediate storing by the register 14 of the number of an engaged trunk line is precluded.

When none of the subscribers 3 is listening to the special service any more, the trunk line circuits 12 sooner or later select the trunk line as being idle, the number of which has up to now been intermediately stored in the memory unit 20. Then the comparator 27 generates an equality signal which puts the flip-flop 23 into position "b".

By means of the proposed trunk line economizing apparatus it is possible to connect all subscribers 3 simultaneously to the speech machine 8 while using a single one of the trunk lines 4 and without loading the central transit exchange 5 more than once.

**Claims**

1. A method of transferring the same information to a plurality of subscribers (3), telecommunications connections being established due to given commands originated by said subscribers, for connecting a source (8) sending said information via a centrally placed transit exchange (5) to said subscribers which are each connected via a subscriber line (2) to a respective one (1) of a number of peripherally placed local exchanges, each of which is connected via its trunk lines (4), identifiable by trunk line numbers, to said transit exchange, characterized by:

executing a search following upon a command from one of said subscribers (3) for ascertaining whether there is a trunk line engaged already for transferring said information to said local exchange (1).

selecting conventionally an idle trunk line connected to the local exchange, if no already established connection has been determined by said search,

connecting said information source (8) to the trunk line selected,

intermediately storing the number of the trunk line selected,

connecting each of the subscriber lines (2) originating the commands to the one trunk line whose number is intermediately stored and

cancelling said intermediate storage by reason of the information no longer being received by any of the subscribers (3) as a result of their having released the connection via their respective subscriber lines (2).

2. Apparatus for transferring, in accordance with claim 1, the same information to a plurality of subscribers (3), telecommunications connections being established due to given commands originated by said subscribers, for connecting a source (8) sending said information via a centrally placed transit exchange (5) to said subscribers which are each connected via a subscriber line (2) to a respective one of a number of peripherally placed local exchanges each of which is connected via its trunk lines (4), identifiable by trunk line numbers, to said transit exchange, said local exchange (1) including a switch/marker (6/7) for connecting an arbitrary associated subscriber line to an arbitrary associated trunk line, and including trunk line circuits (12) for selecting idle trunk lines, characterized in that the apparatus comprises:

a) a signal generator (19) which, due to each command from one of the subscribers, sends a first or a second signal indicating that there is or is not, respectively, a trunk line engaged already for transferring said information to said local exchange,

b) a memory unit (20) for, solely at the reception of said second signal, registering and intermediately storing a number identifying a trunk line selected as idle with the aid of the trunk line circuits (12) and for achieving, due to a terminated registration, that said signal generator (19) sends the first signal,

c) a change-over switch (15, 17) for transferring to said switch/marker (6/7), on reception of said first signal, the intermediately stored number in said memory unit (20) and, on reception of said second signal, said number identifying an idle trunk line,

d) a gate means (16) for, solely on reception of said second signal, ordering the central transit exchange (5) to connect said information source (8) to said trunk line selected as being idle, and

e) a circuit (27) which effects that said signal generator (19) sends the second signal when the trunk line circuits (12) once again select as being idle, by reason of the information no longer being received by any of the subscribers (3) as a result of their having released the connection via their respective subscriber lines, the trunk line whose number is intermediately stored in the memory unit (20).

**Patentansprüche**

1. Verfahren zum Übertragen derselben Information auf eine Vielzahl von Teilnehmern (3), wobei Fernsprechverbindungen aufgrund von bestimmten, von den genannten Teilnehmern ausgehenden Befehlen für das Anschließen einer Quelle (8) eingerichtet sind, welche die genannte Information über eine zentral angeordnete Transitvermittlung (5) zu den genannten Teilnehmern sendet, welche über eine Teilnehmerleitung (2) jeweils an die jeweilige eine (1) von einer Anzahl von peripheren Lokalvermittlungen angeschlossen sind, von denen jede über ihre Fernleitungen (4), identifizierbar durch Fernleitungsnummern, mit der Transitvermittlung verbunden ist, gekennzeichnet durch: Durchführen einer Untersuchung aufgrund eines Befehls einer der Teilnehmer (3) dahingehand, ob eine Fernleitung zum Übertragen der Information zur lokalen Vermittlung (1) bereits belegt ist, Auswählen einer gesprächsfreien Fernleitung, die mit der Lokalvermittlung verbunden ist, wenn keine bereits eingerichtete Verbindung durch die Untersuchung festgestellt worden ist, Verbinden der Informationsquelle (8) mit der ausgewählten Fernleitung, unmittelbares Speichern der Nummer der ausgewählten Fernleitung, Verbinden jeder Befehl abgebenden Teilnehmerleitung (2) mit einer der Fernleitung, dessen Nummer zwischengespeichert worden ist und Löschen der Zwischenspeicherung aufgrund der nicht weiter durch einen der Teilnehmer (3) erhaltenen Information als Resultat dessen Beendigung der Verbindung über die jeweiligen Teilnehmerleitungen (2).

2. Apparat gemäß Anspruch 1 zum Übertragen derselben Information auf eine Vielzahl von Teilnehmern (3), wobei Fernsprechverbindungen aufgrund von bestimmten, von den genannten Teilnehmern ausgehenden Befehlen für das Anschließen einer Quelle (8) eingerichtet sind, welche die genannte Information über eine zentral angeordnete Transitvermittlung (5) zu den genannten Teilnehmern sendet, welche über eine Teilnehmerleitung (2) jeweils an die jeweilige eine (1) von einer Anzahl von peripheren Lokalvermittlungen angeschlossen sind, von denen jede über ihre Fernleitungen (4), identifizierbar durch Fernleitungsnummern, mit der Transitvermittlung verbunden ist und wobei die lokale Vermittlung (1) einen Schalter/Markierer (6/7) zum Verbinden einer willkürlich zugeordeneten Teilnehmerleitung an eine willkürlich zugeordnete Fernleitung und Fernleitungskreise (12) zum Auswählen der freien Fernleitungen umfaßt, dadurch gekennzeichnet, daß der Apparat umfaßt:

a) einen Signalgenerator (19), welcher aufgrund jedes Signals von einem der Teilnehmer ein erstes und eine zweites Signal sendet, welche anzeigen, daß eine Fernleitungen bereits zum Übertragen der Information zur lokalen Vermittlung besetzt ist oder nicht,

b) eine Speichereinheit (20), um nur beim Empfang des zweiten Signals eine Nummer registriert und zwischenspeichert, die eine mit Hilfe der Fernleitungskreise (12) als frei ausgewählte Fernleitung identifiziert, und um bei einer beendeten Registrierung zu erreichen, daß der Signalgenerator (19) das erste Signal sendet,

c) einen Wechselschalter (15, 17), um beim Empfang des ersten Signals die in der Speichereinheit (20) zwischengespeicherte Nummer auf den Schalter/Markierer (6/7) zu übertragen und um beim Empfang des zweiten Signals die Nummer zu übertragen, die eine freie Fernleitung identifiziert,

d) Gattermittel (16) die nur beim Empfang des zweiten Signals die zentrale Transitvermittlung (5) veranlassen, die Informationsquelle (8) mit der als frei ausgewählten Fernleitung zu verbinden, und

e) einen Kreis (27), welcher bewirkt, daß der Signalgenerator (19) das zweite Signal sendet, wenn die Fernleitungskreise (12) aufgrund der nicht länger von einem der Teilnehmer als Resultat dessen empfangenen Information, daß sie die Verbindung über ihre jeweiligen Teilnehmerleitungen unterbrochen haben, erneut die Fernleitung als frei auswählen, deren Nummer in der Speichereinheit (20) zwischengespeichert ist.

**Revendications**

1. Procédé pour transférer la même information vers plusieurs abonnés (3), des connexions de télécommunication étant établies à la suite d'ordres donnés émanant desdits abonnés, pour connecter une source (8) émettant ladite information, par l'intermédiaire d'un centre (5) de transit, placé centralement, vers lesdits abonnés qui sont chacun connectés par une ligne (2) d'abonné à l'un (1), correspondant, d'un certain nombre de centres locaux disposés périphériquement, chacun d'eux étant connecté, par ses jonctions (4) identifiables par des numéros de jonction, audit centre de transit, caractérisé en ce qu'il consiste:

à exécuter une recherche suivant un ordre provenant de l'un desdits abonnés (3) pour déterminer s'il existe une jonction déjà engagée pour transférer ladite information vers ledit centre local (1),

à sélectionner classiquement une jonction libre connectée au centre local si aucune connexion déjà établie n'a été déterminée par ladite recherche,

à connecter ladite source (8) d'informations à la jonction choisie,

à enregistrer indirectement le numéro de la jonction choisie,

à connecter chacune des lignes d'abonnés (2) produisant les ordres à la jonction dont le numéro est enregistré de façon intermédiaire, et

à annuler ledit enregistrement intermédiaire lorsque l'information n'est plus reçue par aucun des abonnés (3) du fait qu'ils ont coupé la connexion par l'intermédiaire de leurs lignes respectives (2) d'abonnés.

2. Appareil pour transférer, conformément à la revendication 1, la même information vers plusieurs abonnés (3), les connexions de télécommunications étant établies à la suite d'ordres donnés émanant desdits abonnés, pour connecter une source (8) émettant ladite information, par l'intermédiaire d'un centre (5) de transit placé centralement, vers lesdits abonnés qui sont connectés chacun par une ligne d'abonné (2) à l'un, respectif, d'un certain nombre de centres locaux disposés périphériquement et connectés chacun par leurs jonctions (4) identifiables par des numéros de jonction, audit centre de transit, ledit centre local (1) comprenant un commutateur/marqueur (6/7 destiné à connecter une ligne d'abonnés associée arbitrairement à une jonction associée arbitrairement, et comprenant des circuits (12) de jonction pour sélectionner des jonctions libres, caractérisé en ce que l'appareil comprend:

(a) un générateur (19) de signaux qui, à la suite de chaque ordre provenant de l'un des abonnés, émet un premier ou un second signal indiquant qu'il existe ou non, respectivement, une jonction déjà engagée pour transférer ladite information vers ledit centre local,

(b) une unité de mémoire (20) destinée, uniquement à la réception dudit second signal, à enregistrer et mémoriser de façon intermédiaire un numéro identifiant une jonction choisie comme libre à l'aide des circuits (21) de jonction et à provoquer, à la suite d'un enregistrement terminé, l'émission du premier signal par ledit générateur (19) de signaux,

(c) un commutateur de basculement (15, 17) destiné à transférer vers ledit commutateur/marqueur (6/7), à la réception dudit premier signal, le numéro enregistré de façon intermédiaire dans ladite unité de mémoire (20) et, à la réception dudit second signal, ledit numéro identifiant une jonction libre,

(d) une porte (16) destinée, uniquement à la réception dudit second signal, à ordonner au centre (5) de transit central de connecter ladite source (8) d'information à ladite jonction sélectionnée en tant que libre, et

(e) un circuit (27) sous l'action duquel ledit générateur (19) de signaux émet le second signal lorsque les circuits (12) de jonction sélectionnent de nouveau, en tant que libres, du fait que l'information n'est plus reçue par aucun des abonnés (3), ces derniers ayant coupé la connexion par l'intermédiaire de leurs lignes respectives d'abonnés, la jonction dont le numéro est enregistré de façon intermédiaire dans l'unité (20) de mémoire.